# EUROPÄISCHE PATENTSCHRIFT

(11) **EP 3 181 979 B1**
(45) Veröffentlichungstag und Bekanntmachung des Hinweises auf die Patenterteilung: **12.02.2020**
(21) Anmeldenummer: 16205165.0
(22) Anmeldetag: 19.12.2016
(51) Int. Cl.: B63B 3/68, F16L 59/04, F16L 59/02, F16L 59/08, F16L 59/14

(54) **ISOLIERMATRATZE ZUM ISOLIEREN VON HEISSEN ANLAGENTEILEN**
ISOLATING PAD FOR ISOLATING HOT PARTS OF AN INSTALLATION
MATELAS ISOLANT SERVANT À ISOLER DES PARTIES D'INSTALLATION CHAUDES

(30) Priorität: 18.12.2015 DE 202015106932 U
(43) Veröffentlichungstag der Anmeldung: 21.06.2017
(73) Patentinhaber: Lethe GmbH, 21079 Hamburg (DE)
(72) Erfinder: DAVID, Thorsten, 22607 Hamburg (DE); BRUMMERLOH, Armin, 28211 Bremen (DE); SCHLOSSER, Frank, 26384 Wilhelmshaven (DE)
(74) Vertreter: Hauck Patentanwaltspartnerschaft mbB

(56) Entgegenhaltungen:
- WO-A1-00/66849
- DE-A1- 19 720 537
- DE-U1-202010 016 709
- US-A- 5 104 700

## Beschreibung

Die Erfindung bezieht sich auf eine Isoliermatratze zum Isolieren von heißen Anlagenteilen, insbesondere von Schiffen und Produktionsanlagen.

Die EP 2 095 938 B1 beschreibt eine Rohrisolierung, insbesondere für heiße Abgasrohre, die auch bei hohem Temperaturen kein Formaldehyd freisetzt, und zu Revisionszwecken problemlos demontiert und danach wieder neu montiert werden kann. Die Rohrisolierung umfasst eine flexible Filzmatte, die ein- oder mehrlagig um das Rohr herumgelegt wird und aus anorganischen Fasern gebildet ist. Über der Filzmatte ist eine für Feuchtigkeit, Wasser und Öle impermeable dünne Metallfolie angeordnet, deren Stärke in einem Bereich von 0,03 bis 0,1 mm liegt. Über der impermeablen Folie ist eine Gewebeschicht angeordnet, die ein Glasfasergewebe ist. Der Glühverlust der Gewebeschicht ist kleiner als 0,5 %, vorzugsweise kleiner als 0,1 %. Die Filzmatte kann ohne organische Bindemittel beispielsweise durch Vernadeln hergestellt werden. Vorzugsweise ist die Filzmatte aus anorganischen Fasern, wie z.B. aus Erdalkali-Silikatfasern, gebildet. Da die Filzmatte keine organischen Kleber oder Bindemittel aufweist, kann sie auch auf hohe Temperaturen aufgeheizt werden, ohne dass sich Formaldehyd als thermisches Zersetzungsprodukt bildet. Nachteilig ist, dass das an der Außenseite angeordnete Gewebe leicht Öl und andere Verschmutzungen aufnehmen kann. Eine Reinigung ist schwierig. Ferner kann die Verschmutzung dazu führen, dass die Rohrisolierung nicht mehr feuerfest ist. Außerdem sind Montage und Demontage aufwendig, weil die Lagen einzeln nacheinander aufgebracht und abgenommen werden.

Die WO 00/66849 A1 beschreibt eine Isoliermatratze, die aus drei Schichten aufgebaut ist, nämlich aus einer Rockwool-Matte, die einseitig mit Aluminium beschichtet ist, auf welchem ein hitzebeständiges Netz oder Gewebe aufgebracht ist.

Die US 5,104,700 A beschreibt eine Isoliermatratze, an der an beiden Außenseiten eines Mattenstapels ein Gewirke mit hitzebeständigen Eigenschaften aufgebracht ist. An den Seitenflächen des Mattenstapels ist kein Gewirke angebracht.

Davon ausgehend liegt der Erfindung die Aufgabe zugrunde, eine Isoliermatratze zur Verfügung zu stellen, die beim Einsatz unter hohem Temperaturen eine Freisetzung von Formaldehyd und anderen flüchtigen Bestandteilen vermeidet, einen guten Brandschutz auch unter erhöhter Schmutzbelastung gewährleistet, unter verringertem Aufwand gegen Beschädigung durch mechanische Belastungen geschützt ist und einfacher montierbar und demontierbar ist.

Die Aufgabe wird durch die Isoliermatratze mit den Merkmalen von Anspruch 1 gelöst. Vorteilhafte Ausgestaltungen der Isoliermatratze sind in Unteransprüchen angegeben.

Die erfindungsgemäße Isoliermatratze zum Isolieren von heißen Anlagenteilen, insbesondere von Schiffen und Produktionsanlagen, umfasst:
- mindestens eine hitzebeständige Isolationsfasermatte,
- ein die mindestens eine hitzebeständige Isolationsfasermatte vollständig umhüllendes, hitzebeständiges Gewebe und/oder Gewirke und
- eine Aluminiumfolie, die an mindestens einer der beiden großen Seitenflächen des hitzebeständigen Gewebes und/oder Gewirkes angeordnet ist.

Die Isoliermatratze ist so an heißen Anlagenteilen montierbar, dass sie mit dem hitzebeständigen Gewebe und/oder Gewirke an der Innenseite am heißen Anlagenteil anliegt und die Aluminiumfolie an der von dem heißen Anlagenteil abgewandten Seite der Isoliermatratze angeordnet ist. Dabei befindet sich die Aluminiumfolie entweder zwischen Gewebe und/oder Gewirke und Isolationsfasermatte oder an der Außenseite des Gewebes und/oder Gewirkes. Falls die Aluminiumfolie an der Außenseite des Gewebes und/oder Gewirkes angeordnet ist, bildet sie vorzugsweise zugleich die Außenseite der Isoliermatratze. Die Aluminiumfolie verhindert das Eindringen von Schmutz in die Isolationsfasermatte. Wenn sie an der Außenseite des Gewebes und/oder Gewirkes angeordnet ist, verhindert sie auch ein Eindringen von Schmutz in das Gewebe und/oder Gewirke. Wenn die Aluminiumfolie die Außenseite der Isoliermatratze bildet, ist diese zudem von außen gut zu reinigen. Mechanische Beschädigungen durch Beanspruchungen der Aluminiumfolie von außen werden dadurch verhindert, dass das Gewebe und/oder Gewirke die Isolationsfasermatte vollständig umhüllt und somit zwischen Isolationsfasermatte und Aluminiumfolie angeordnet ist oder auch die Aluminiumfolie umhüllt. Infolgedessen unterstützt das Gewebe und/oder Gewirke die Aluminiumfolie von unten oder schützt sie von außen und verhindert ein Nachgeben und Einreißen der Aluminiumfolie bei punktförmigen und anderen Belastungen von außen. Das vollständige Umhüllen der Isolationsfasermatte durch ein Gewebe und/oder Gewirke reduziert den Materialaufwand und vereinfacht die Herstellung, da das separate Anbringen und Vernähen mehrerer Gewebe und/oder Gewirke entfallen kann. Zudem ist die Isoliermatratze leicht als Ganzes montierbar und demontierbar und müssen zum Bilden einer Rohrisolierung keine einzelnen Lagen mehr gesondert aufgebracht und abgenommen werden.

Das Gewebe und/oder Gewirke ist ein flexibles Flächengebilde, das gewebt und/oder gewirkt ist, mit dem die Isolationsfasermatte umhüllt werden kann. Bei einem Gewebe handelt es sich um ein Flächengebilde mit mindestens zwei sich kreuzenden Fadensystemen (Kette und Schuss). In dieser Anmeldung wird das Gewebe auch als Gewebetuch bezeichnet. Bei einem Gewirke handelt es sich um eine Maschenware, die aus einem oder mehreren Fadensystemen besteht. Bei Kettengewirken werden die Maschen in Längsrichtung, bei Kuliergewirken quer zur Längsrichtung der Ware gebildet.

Gemäß einer bevorzugten Ausführungsart ist die hitzebeständige Isolationsfasermatte und/oder das hitzebeständige Gewebe und/oder Gewirke so beschaffen, dass sie Temperaturen von 500°C und mehr ohne wesentliche Veränderungen ihrer Struktur und ohne Verlust ihrer Funktion ertragen. Gemäß einer bevorzugten Ausführungsart hat die hitzebeständige Isolationsfasermatte und/oder das hitzebeständige Gewebe und/oder Gewirke einen Glühverlust von weniger als 0,5 %, vorzugsweise von weniger als 0,1 %. Gemäß einer bevorzugten Ausführungsart besteht die Isolationsfasermatte und/oder das Gewebe und/oder das Gewirke ausschließlich aus Materialien, die bei Temperaturen von 500°C und mehr kein Formaldehyd freisetzen. Gemäß einer bevorzugten Ausführungsart ist die Isolationsfasermatte und/oder das Gewebe und/oder das Gewirke ohne organische Kleber oder Bindemittel oder andere Materialien hergestellt, die bei Erhitzung Formaldehyd bilden. Das Gewebe und/oder Gewirke weist aufgrund seiner Struktur einen hinreichenden Zusammenhalt auf, sodass es ohne organische Klebstoffe oder Bindemittel oder andere Materialien auskommt, die bei Erhitzung Formaldehyd bilden.

Gemäß einer Ausführungsart umgibt das hitzebeständige Gewebe und/oder Gewirke die Isolationsfasermatte vollständig und ist die Aluminiumfolie außen an einer der beiden großen Seitenflächen des hitzebeständigen Gewebes und/oder Gewirkes angeordnet. Hierdurch wird das Eindringen von Schmutz in die Isoliermatratze besonders wirksam verhindert und eine Reinigung durch Entfernen von Schmutz von der Außenseite der Aluminiumfolie erleichtert. Hierbei ist gemäß einer bevorzugten Ausführungsart das Gewebe und/oder Gewirke ein Gewebe und/oder Gewirke aus Glasfasern.

Gemäß einer anderen Ausführungsart umgibt ein Gewebe und/oder Gewirke aus Edelstahl die Isolationsfasermatte vollständig und ist zwischen dem Gewebe und/oder Gewirke und der Isolationsfasermatte eine die Isolationsfasermatte vollständig umgebende Aluminiumfolie angeordnet. Das Gewebe und/oder Gewirke aus Edelstahl ist besonders hitzebeständig und schützt die Isoliermatratze besonders gut gegen mechanische und andere Belastungen von außen. Auch die Aluminiumfolie ist vor solchen Belastungen geschützt. Die Aluminiumfolie, welche die Isolationsfasermatte vollständig umgibt, verhindert besonders wirksam ein Eindringen von Schmutz in die Isolationsfasermatte. Zudem ist die Isoliermatratze von außen gut zu reinigen. Hierbei ist gemäß einer weiteren Ausführungsart die Aluminiumfolie eine glatte Aluminiumfolie oder eine Grobkorn-Aluminiumfolie.

Gemäß einer bevorzugten Ausführungsart ist an den Außenseiten des Gewebes und/oder Gewirkes aus Edelstahl keine Aluminiumfolie angeordnet. Hierdurch ist die Isoliermatratze besonders unempfindlich gegenüber mechanischen und anderen Belastungen von außen.

Gemäß einer anderen Ausführungsart ist ein unterer Teil der Isolationsfasermatte von einem Gewebe und/oder Gewirke aus Edelstahl umhüllt und ein oberer Teil der Isolationsfasermatte von einem Gewebe und/oder Gewirke aus einem anderen Material als Edelstahl umhüllt, sodass die Isolationsfasermatte insgesamt vollständig von dem Gewebe und/oder Gewirke aus Edelstahl und dem Gewebe und/oder Gewirke aus einem anderen Material als Edelstahl umhüllt ist. Ferner ist zwischen der Isolationsfasermatte und den Geweben und/oder Gewirken, d.h. dem Gewebe und/oder Gewirke aus Edelstahl und dem Gewebe und/oder Gewirke aus einem anderen Material als Edelstahl, eine die Isolationsfasermatte vollständig umhüllende Aluminiumfolie angeordnet und außen an einer der großen Seitenflächen des Gewebes und/oder Gewirkes aus einem anderen Material als Edelstahl eine weitere Aluminiumfolie angeordnet. Gemäß einer bevorzugten Ausführungsart ist das Gewebe und/oder Gewirke als einem anderen Material als Edelstahl ein Gewebe und/oder Gewirke aus Glasfasern.

Diese Ausführungsarten sind an dem heißen Anlagenteil so montierbar, dass sie mit dem besonders gegen mechanische und andere Belastungen geschützten Gewebe und/oder Gewirke aus Edelstahl an dem heißen Anlagenteil anliegen. Hierdurch wird eine Beschädigung dieser besonderen Belastungen ausgesetzten Seite verhindert. Dadurch, dass die Aluminiumfolie die Isolationsfasermatte vollständig umhüllt, wird ein Eindringen von Schmutz in die Isolationsfasermatte verhindert. Wenn die Isoliermatratze mit dem Gewebe und/oder Gewirke aus Edelstahl an dem heißen Anlagenteil anliegt und eine weitere Aluminiumfolie vorhanden ist, verhindert die weitere Aluminiumfolie zusätzlich ein Eindringen von Schmutz. Zudem kann die Außenseite der weiteren Aluminiumfolie leicht gereinigt werden.

Gemäß einer weiteren Ausführungsart ist die Isolationsfasermatte vollständig von einem Gewebe und/oder Gewirke umhüllt, zwischen dem Gewebe und/oder Gewirke und der Isolationsfasermatte eine die Isolationsfasermatte vollständig umhüllende Aluminiumfolie angeordnet und außen an mindestens einer der beiden großen Seitenflächen des Gewebes und/oder Gewirkes eine weitere Aluminiumfolie angeordnet. Gemäß einer weiteren Ausführungsart besteht das Gewebe und/oder Gewirke aus Glasfasern. Diese Isolationsfasermatte ist einfach montierbar, schmutzabweisend und einfach zu reinigen.

Gemäß einer weiteren Ausführungsart sind ein den unteren Teil der Isolationsfasermatte umhüllendes Gewebe und/oder Gewirke und ein den oberen Teil der Isolationsfasermatte umhüllendes Gewebe und/oder Gewirke durch eine seitlich um die Isolationsfasermatte umlaufende Naht miteinander verbunden. Dies erleichtert die Herstellung einer Isoliermatratze, bei der die Isolationsfasermatte vollständig durch ein Gewebe und/oder Gewirke umhüllt ist. Diese Ausführungsart gilt sowohl für Isoliermatratzen, bei denen der untere Teil der Isolationsfasermatte von einem Gewebe und/oder Gewirke aus Edelstahl und der obere Teil der Isolationsfasermatte aus einem Gewebe und/oder Gewirke aus einem anderen Material als Edelstahl, insbesondere aus Glasfasern, umhüllt ist, als auch für Isoliermatratzen, bei denen der untere Teil und der obere Teil der Isolationsfasermatte aus demselben Gewebe und/oder Gewirke, insbesondere aus einem Gewebe und/oder Gewirke aus Edelstahl oder aus Glasfasern, umhüllt ist.

Gemäß einer weiteren Ausführungsart ist die hitzebeständige Isolationsfasermatte ein Filz oder Vlies. Gemäß einer weiteren Ausführungsart ist die Isolationsfasermatte hergestellt aus Glasfasern, Mineralfasern, Mineralwollfasern, Kohlenstofffasern oder Silikatfasern oder aus einem Gemisch aus mehreren der vorgenannten Komponenten. Gemäß einer weiteren Ausführungsart ist das Filz oder das Vlies durch Vernadelung gebildet, insbesondere durch eine mechanische Vernadelung oder durch eine Wasserstrahlvernadelung. Gemäß einer bevorzugten Ausführungsart ist die Isolationsfasermatte klebstoff- und bindemittelfrei. Gemäß einer weiteren Ausführungsart ist die Isolationsfasermatte ein von der Firma Morgan Thermal Ceramics unter der Produktbezeichnung "Fire Master® 607® Blanket" oder ein von der Firma Techno-Gewebe Hazte GmbH unter der Bezeichnung "Fire Master Techno Wool 96" kommerzialisiertes Produkt.

Gemäß einer weiteren Ausführungsart ist das hitzebeständige Gewebe ein Glasgewebe oder Glasfasergewebe, Metallgewebe oder Silikatgewebe. In dieser Anmeldung werden diese Gewebe auch bezeichnet als Glasgewebetuch oder Glasfasergewebetuch, Metallgewebetuch oder Silikatgewebetuch. Vorzugsweise ist das Gewebe ein ausgeglühtes Glas (faser-)gewebe. Weiterhin vorzugsweise kommt als Gewebe ein von der Firma Rex GmbH unter der Produktbezeichnung "620 KAR/GV" oder "LM-26384" kommerzialisiertes Glasfasergewebe zur Anwendung.

Gemäß einer weiteren Ausführungsart sind in mindestens zwei der nachfolgenden Bestandteile hitzebeständige Isolationsfasermatte, hitzebeständiges Gewebe und/oder Gewirke, Aluminiumfolie, weitere Aluminiumfolie mittels mindestens eines der nachfolgenden Mittel miteinander verbunden: durch ein Garn entlang mindestens einer Naht, durch Heftklammern oder durch andere hitzebeständige Verbindungsmittel. Gemäß einer bevorzugten Ausführungsart kommen Verbindungsmittel zum Einsatz, die formaldehydfrei sind und keine Bindemittel oder Klebstoffe enthaltend. Vorzugsweise kommen Edelstahl-, Glas- oder Kevlar-Garn oder eine Mischung von einer oder mehrerer der genannten Garne zum Einsatz.

Gemäß einer weiteren Ausführungsart ist die Aluminiumfolie eine geschlossene, für Feuchtigkeit, Wasser und Öle undurchlässige Aluminiumfolie. Gemäß einer weiteren Ausführungsart hat die Aluminiumfolie eine Stärke in einem Bereich von 0,01 bis 0,3 mm, vorzugsweise von 0,025 bis 0,2 mm, vorzugsweise von 0,03 bis 0,1 mm.

Gemäß einer weiteren Ausführungsart ist die Aluminiumfolie und/oder die weitere Aluminiumfolie eine glatte Aluminiumfolie. Alternativ ist die Aluminiumfolie und/oder die weitere Aluminiumfolie eine Grobkorn-Aluminiumfolie. Gemäß einer bevorzugten Ausführungsart ist eine eine Außenseite der Isoliermatratze bildende Aluminiumfolie eine Grobkorn-Aluminiumfolie. Eine Grobkorn-Aluminiumfolie kann mechanischen Belastungen besonders gut standhalten. Beispielsweise wird ein von der Firma ALUJET GmbH, D-82291 Mammendorf unter der Bezeichnung "ALUJET Grobkornfolie" kommerzialisiertes Produkt verwendet.

Gemäß einer weiteren Ausführungsart sind an der Außenseite der Aluminiumfolie oder des Gewebes und/oder Gewirkes Haken und/oder Druckknöpfe und/oder andere hitzebeständige Befestigungsmittel zum Fixieren der Isoliermatratze auf einem Anlagenteil vorhanden. Vorzugsweise bestehen die Befestigungsmittel aus Metall.

Ferner betrifft die Erfindung eine Isolieranordnung mit einer Armatur, einem Rohr oder einem anderen Anlagenteil und mindestens einer das Anlagenteil umschließenden, mit der Außenseite zur Umgebung weisenden Isoliermatratze gemäß einer der Ansprüche 1 bis 14.

Gemäß einer weiteren Ausführungsart ist die Isoliermatratze auf dem Anlagenteil durch mindestens einen Draht gesichert, der durch die Haken hindurchgeführt ist und die Isoliermatratze um das Anlagenteil herum zusammenzieht. Gemäß einer weiteren Ausführungsart besteht der Draht aus Metall.

Gemäß einer weiteren Ausführungsart umfasst die Isolieranordnung eine auf dem Anlagenteil aufgebrachte weitere Isoliermatratze, die mindestens eine hitzebeständige Isolationsfasermatte, eine auf einer der beiden großen Seitenflächen der Isolationsfasermatte angeordnete oder diese vollständig umhüllende Aluminiumfolie und ein die mindestens eine Isolationsfasermatte und die Aluminiumfolie vollständig umhüllendes Gewebe und/oder Gewirke aus Edelstahl aufweist, und eine die weitere Isoliermatratze umhüllende Isoliermatratze gemäß einem der Ansprüche 1 bis 14.

Gemäß einer weiteren Ausführungsart umfasst die Isolieranordnung eine auf dem Anlagenteil aufgebrachte weitere Isoliermatratze gemäß Anspruch 3 oder 4 und eine die weitere Isoliermatratze umhüllende Isoliermatratze gemäß Anspruch 6. Gemäß einer weiteren Ausführungsart hat die Isoliermatratze gemäß Anspruch 6 ein Gewebe und/oder Gewirke aus Glasfasern.

Die weitere Isoliermatratze ist besonders gut gegen mechanische Belastungen geschützt. Sie wird durch die umhüllende Isoliermatratze vor Verschmutzungen geschützt. Für die Isolationsfasermatte der weiteren Isoliermatratze können dieselben Materialien verwendet werden, wie für die Isolationsfasermatte der Isoliermatratze. Für die Aluminiumfolie der weiteren Isoliermatratze können dieselben Materialien verwendet werden, wie für die Aluminiumfolie der Isoliermatratze.

Die verschiedenen Ausführungsarten tragen unterschiedlichen Anforderungen Rechnung. Durch Gewebe und/oder Gewirke aus Edelstahl wird eine erhöhte Stabilität und Festigkeit und durch Gewebe aus Glasfasern eine leichtere Verarbeitbarkeit und Montierbarkeit erreicht. Je nach Einsatzfall können unterschiedliche Ausführungsarten ausgewählt bzw. kombiniert werden.

Die Erfindung wird nachfolgend anhand der anliegenden Zeichnungen von Ausführungsbeispielen näher erläutert. In den Zeichnungen zeigen:
Fig. 1a und b eine Isoliermatratze mit einem zwei Isolationsfasermatten umhüllenden Glasfasergewebe und einer Aluminiumfolie an der Außenseite in einer Perspektivansicht schräg von oben (Fig. 1a) und in einem vertikalen Teilschnitt (Fig. 1b);
Fig. 2a und b eine Isoliermatratze mit einer Isolationsfasermatte vollständig umhüllenden Aluminiumfolie und einem Gewebe und/oder Gewirke aus Edelstahl an der Außenseite in einer Perspektivansicht schräg von oben (Fig. 2a) und in einer vergrößerten Detailansicht (Fig. 2b);
Fig. 3a-d dieselbe Isoliermatratze montiert an einem Rohr in einer Vorderansicht (Fig. 3a), in einem Längsschnitt (Fig. 3b), in einer Perspektivansicht schräg von oben (Fig. 3c) und in einem Querschnitt (Fig. 3d);
Fig.4a und b eine Isoliermatratze mit einer eine Isolationsfasermatte vollständig umhüllenden Aluminiumfolie und einem Gewebe und/oder Gewirke aus Edelstahl an der Unterseite, einem Glasfasergewebe an der Oberseite und einer Aluminiumfolie an der Außenseite des Glasfasergewebes in einer Perspektivansicht schräg von oben (Fig. 4a) und in einer vergrößerten Detailansicht (Fig. 4b);
Fig. 5a-d dieselbe Isoliermatratze montiert an einem Rohr in Vorderansicht (Fig. 5a), in einem Längsschnitt (Fig. 5b), in einer Perspektivansicht schräg von oben (Fig. 5c) und in einem Querschnitt (Fig. 5d);
Fig. 6 eine Isoliermatratze mit einer die Isolationsfasermatte vollständig umhüllenden Aluminiumfolie, einem die Aluminiumfolie vollständig umhüllenden Glaserfasergewebe und einer Aluminiumfolie an der Außenseite in einer Perspektivansicht schräg von oben (Fig. 6a) und in einer vergrößerten Detailansicht (Fig. 6b);
Fig. 7a-d dieselbe Isoliermatratze montiert an einem Rohr in einer Seitenansicht (Fig. 7a), in einem Vertikalschnitt (Fig. 7b), in einer Perspektivansicht von oben (Fig. 7c) und in einem Querschnitt (Fig. 7d);
Fig. 8a-d ein Rohr mit einer direkt darum herumgelegten Isoliermatratze gemäß Fig. 2 und eine um diese herumgelegten Isoliermatratze gemäß Fig. 6 in Vorderansicht (Fig. 8a), einem Längsschnitt (Fig. 8b), einer Perspektivansicht von oben (Fig. 8c) und einem Querschnitt (Fig. 8d).

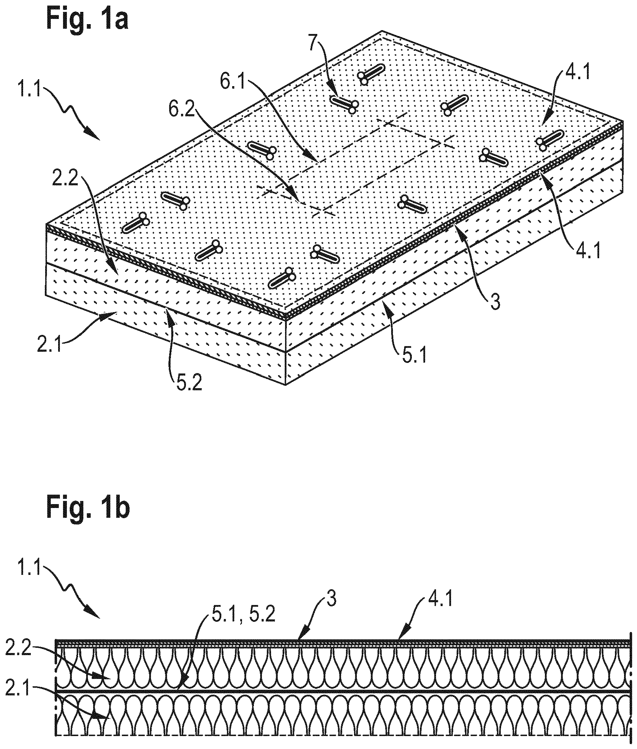

Gemäß Fig. 1 umfasst eine Isoliermatratze 1.1, zwei hitzebeständige Isolationsfasermatten 2.1, 2.2, die übereinander gelagert sind. Hierbei handelt es sich beispielsweise um zwei jeweils 60 mm starke Isolationsfasermatten. Bevorzugt wird eine Filzmatte verwendet, die von der Firma Techno-Gewebe Hazte GmbH unter der Produktbezeichnung "Firemaster Techno Wool 96" vermarktet wird. Die Isolationsfasermatte setzt auch unter Wärmebelastung keine (bzw. nur eine vernachlässigbare Menge) Formaldehyde frei, sodass sie als "formaldehydfrei" bezeichnet werden kann.

Vorzugsweise um die beiden übereinander geschichteten Isolationsfasermatten 2.1, 2.2 herum ist ein hitzebeständiges Gewebe herumgelegt, das als Glasfasergewebe 3.6 ausgebildet ist. Bei einem alternativen Ausführungsbeispiel, das nicht Gegenstand der Erfindung ist, ist das Glasfasergewebe 3 nur auf der Oberseite der Isolationsfasermatte 2.2 angeordnet, wie in Fig. 1 gezeigt. Das Glasfasergewebe 3 hat einen Glühverlust von maximal 0,2 Gew.-% und wird daher ebenfalls als formaldehydfrei bezeichnet.

Auf einer großen Seitenfläche des hitzebeständigen Glasfasergewebes 3 ist eine Aluminiumfolie 4.1 angeordnet. Hierbei handelt es sich vorzugsweise um eine Grobkorn-Aluminiumfolie.

Die Isolationsfasermatten 2.1, 2.2 sind an den Längsseiten und in Querseiten mittels eines Garns in Längsnähten 5.1 und Quernähten 5.2 miteinander vernäht.

Ferner sind das Glasfasergewebe 3, die Isolationsfasermatten 2.1, 2.2 und die Aluminiumfolie 4.1 mittels eines Garns durch weitere Nähte 6.1, 6.2 miteinander vernäht.

An der Außenseite der Aluminiumfolie 4.1 sind Haken 7 fixiert, die zum Hindurchführen eines Drahtes zum Befestigen der Isoliermatratze 1.1 an einem Anlagenteil dienen.

Die Isoliermatratze 1.1 ist leicht herstellbar, montierbar und demontierbar, kann leicht sauber gehalten werden und ist gegen mechanische Beanspruchungen geschützt. Hierzu trägt außer der Schicht aus Glasfasergewebe 3 zwischen Aluminiumfolie 4.1 und Isolationsfasermatten 2.1, 2.2 die Verwendung von Großkorn-Aluminiumfolie bei.

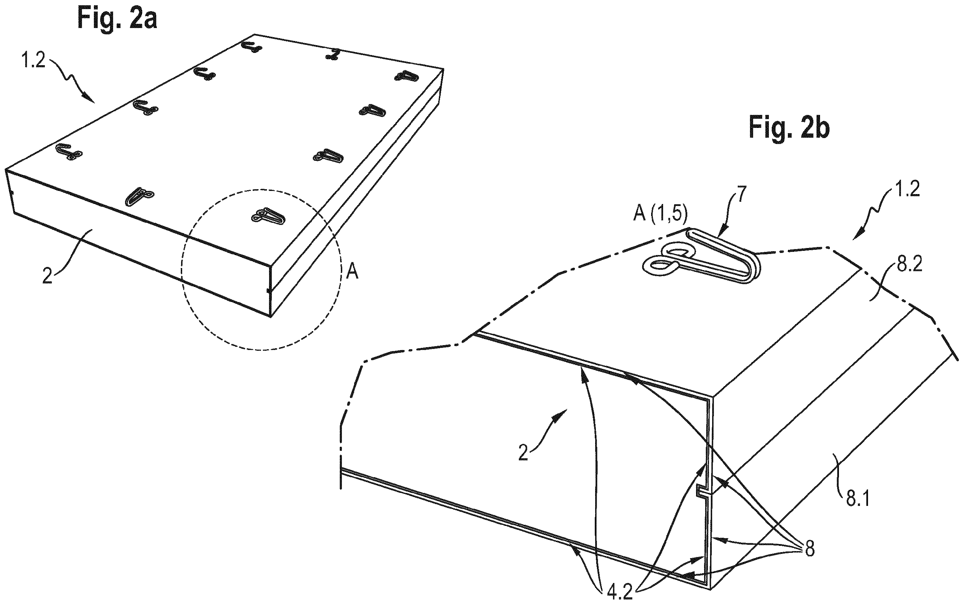

Gemäß Fig. 2 umfasst die Isoliermatratze 1.2 eine hitzebeständige Isolationsfasermatte 2, die vollständig von einer Aluminiumfolie 4.2 umhüllt ist. Die Aluminiumfolie 4.2 ist eine glatte Aluminiumfolie oder eine Grobkorn-Aluminiumfolie. Die Aluminiumfolie 4.2 ist wiederum vollständig von einem Gewebe und/oder Gewirke 8 aus Edelstahl umhüllt. Ein unterer Teil 8.1 des Gewebes und/oder Gewirkes aus Edelstahl ist um den unteren Teil der Isolationsfasermatte 2 gehüllt und ein oberer Teil 8.2 des Gewebes und/oder Gewirkes aus Edelstahl um den oberen Teil der Isolationsfasermatte 2. Der untere Teil 8.1 und der obere Teil 8.2 des Gewebes und/oder Gewirkes sind entlang einer Naht durch einen Garn miteinander verbunden.

An der Außenseite des oberen Teils 8.2 des Gewebes und/oder Gewirkes aus Edelstahl sind Haken 7 fixiert, die zum Hindurchführen eines Drahtes zum Befestigen der Isoliermatratze 1.2 an einem Anlagenteil dienen.

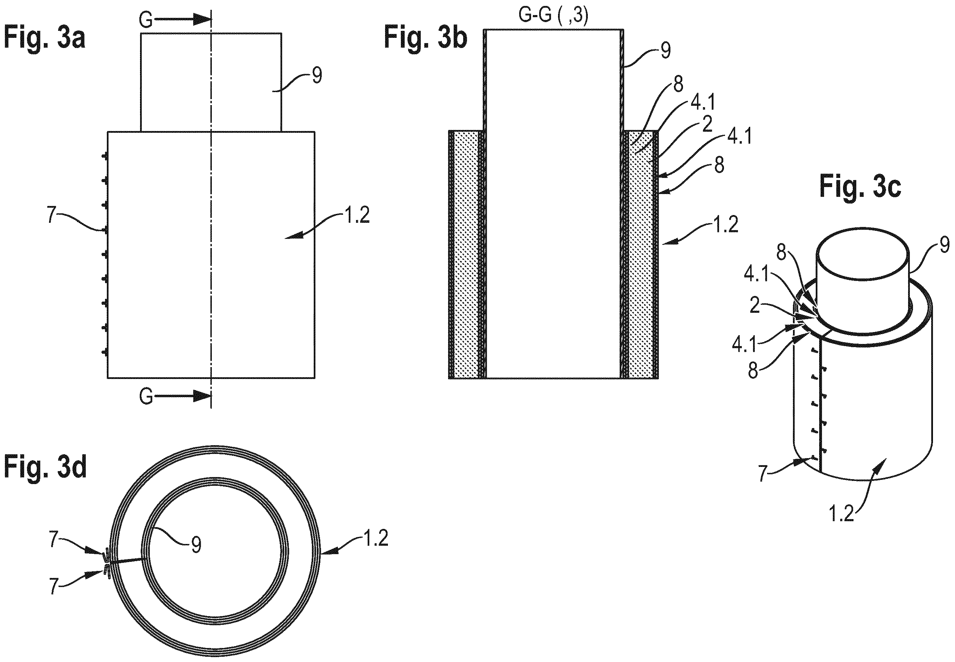

Gemäß Fig. 3 ist die Isoliermatratze 1.2 um ein Anlagenteil in Form eines Rohres 9 gelegt, sodass die Haken 7 auf der Außenseite angeordnet sind. Zwei Ränder einer Isoliermatratze, an dem jeweils eine Reihe Haken 7 angeordnet ist, liegen unmittelbar nebeneinander, sodass die Isoliermatratze 1.2 in dieser Lage mittels eines Drahtes gesichert werden kann, der die Haken 7 der beiden benachbarten Reihen miteinander verbindet.

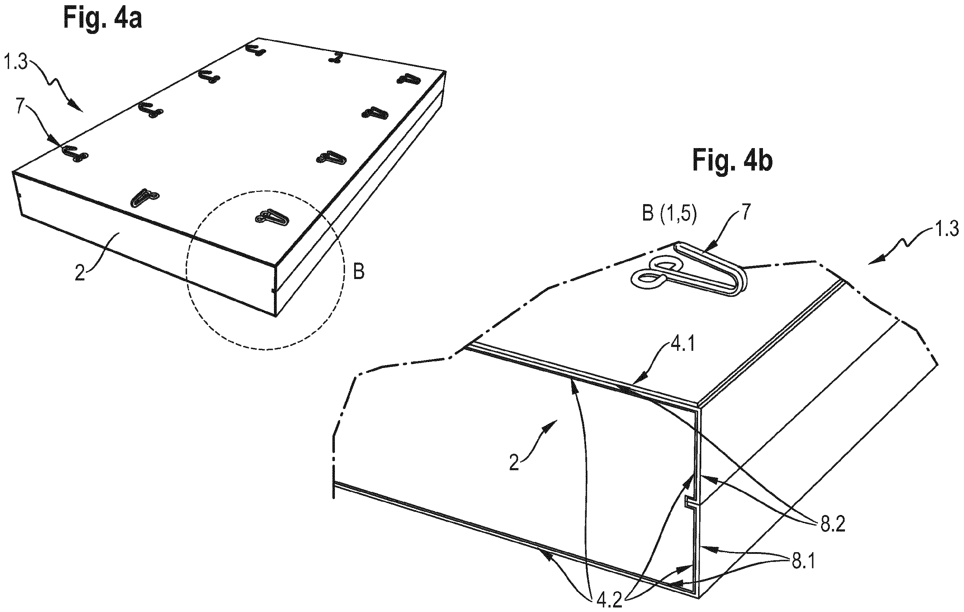

Die Isoliermatratze 1.3 von Fig. 4 weist im Unterschied zu der vorbeschriebenen Isoliermatratze 1.2 an der Außenseite der Aluminiumfolie 4.2 ein Gewebe und/oder Gewirke auf, wobei ein unterer Teil 8.1 des Gewebes und/oder Gewirkes aus Edelstahl und ein oberer Teil 3.2 des Gewebes und/oder Gewirkes aus Glasfasern besteht. Ein weiterer Unterschied liegt darin, dass an der Außenseite des oberen Teils 3.2 des Gewebes und/oder Gewirkes aus Glasfasern eine weitere Aluminiumfolie 4.1 angeordnet ist. Bei der weiteren Aluminiumfolie 4.2 handelt es sich vorzugsweise um eine Grobkorn-Folie. An der Außenseite der weiteren Aluminiumfolie 4.1 sind wiederum Haken 7 fixiert.

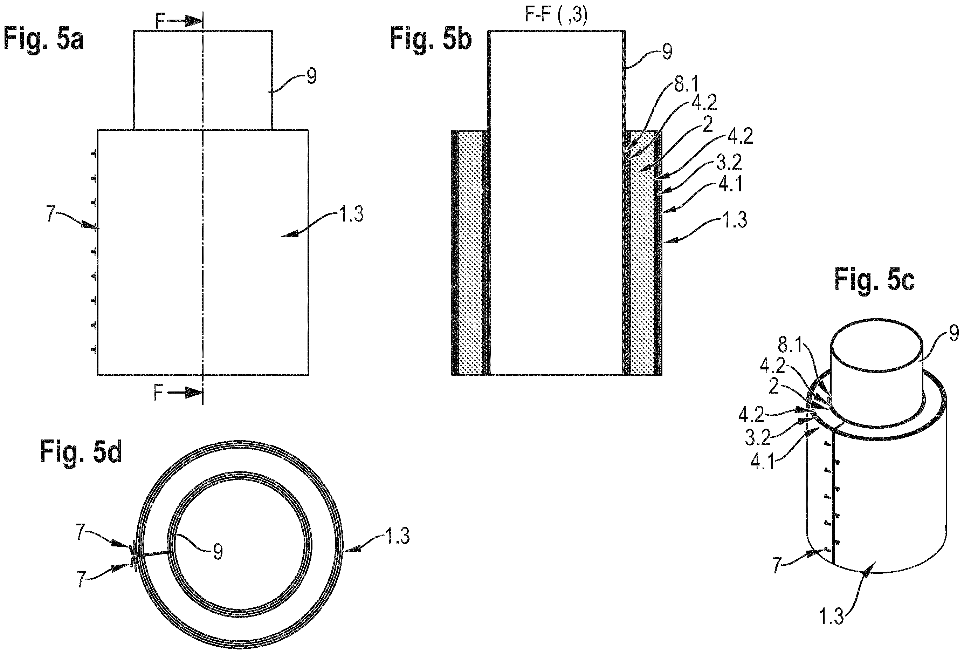

Die Isoliermatratze 1.3 ist gemäß Fig. 5 um ein Rohr 9 herumgelegt, wobei das Gewebe und/oder Gewirke 8.1 aus Edelstahl an der Außenseite des Rohrs 9 anliegt und die Haken 7 auf der Außenseite angeordnet sind. Zwei Reihen mit Haken 7 an benachbarten Rändern der Isoliermatratze 1.3 können wiederum mittels eines Drahtes verbunden werden, um die Isoliermatratze 1.3 in der gezeigten Stellung am Rohr 9 zu fixieren.

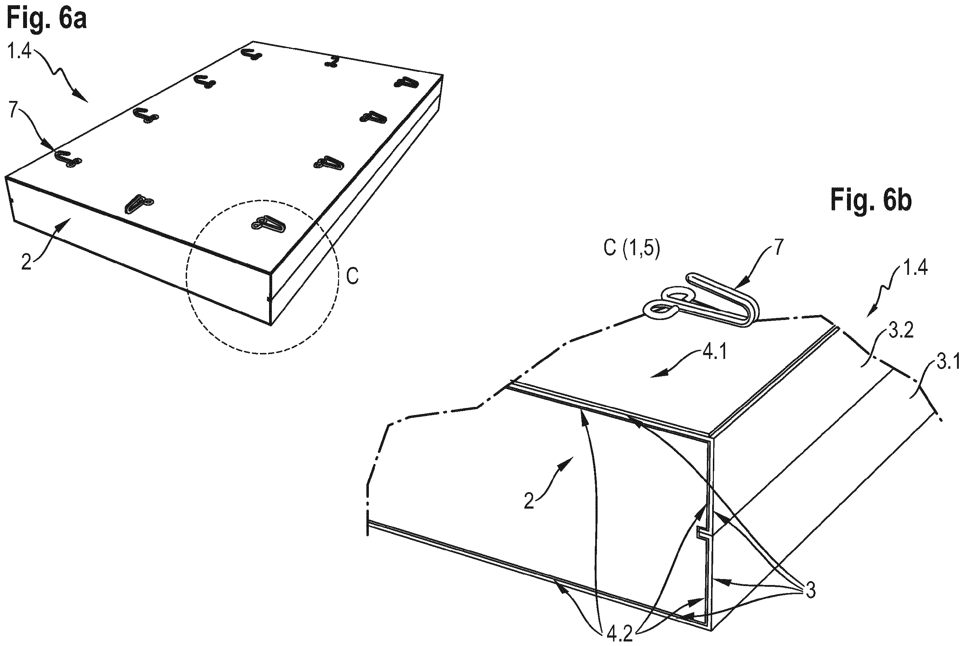

Die Isolationsmatratze 1.4 von Fig. 6 unterscheidet sich von der Isolationsmatratze 1.3 von Fig. 5 dadurch, dass auch der untere Teil der Isolationsfasermatte 2 durch einen unteren Teil eines Glasfasergewebes 3.1 umhüllt ist. Der untere Teil des Glasfasergewebes 3.2 ist mit dem oberen Teil des Glasfasergewebes 3.2, das den oberen Teil der Isolationsfasermatte 1.4 umhüllt, entlang Nähten 6.1, 6.2 mittels eines Garns verbunden. Auf der Außenseite des oberen Teils des Glasfasergewebes 3.2 ist wiederum eine Aluminiumfolie 4.1 angeordnet, wobei es sich um eine Großkorn-Aluminiumfolie handelt.

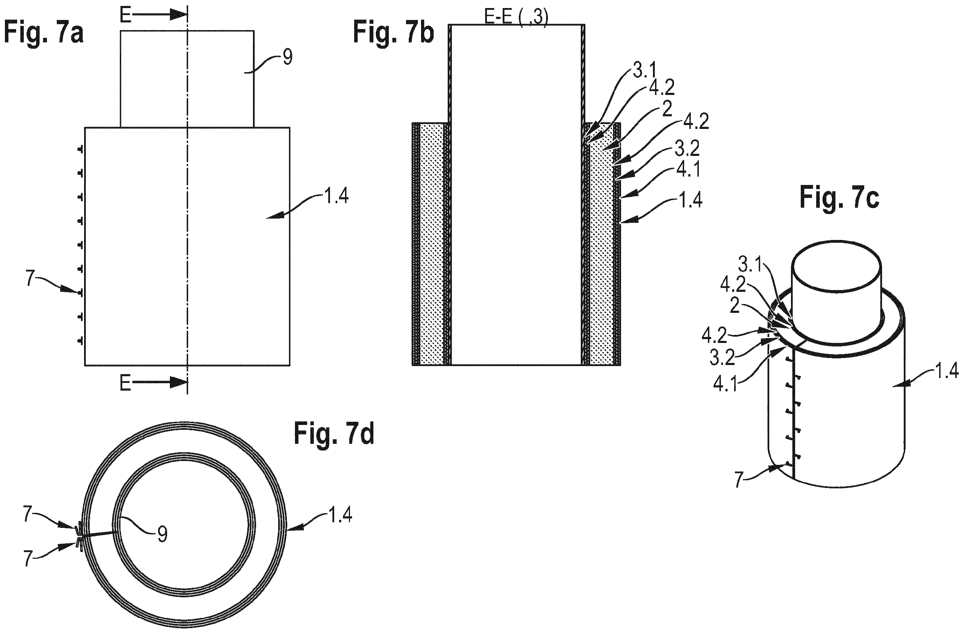

Gemäß Fig. 7 ist die Isolationsfasermatte 1.4 um ein Rohr 9 herumgelegt, wobei Haken 7 an der Außenseite der Aluminiumfolie 4.1 in zwei Reihen an benachbarten Rändern einander gegenüberliegen. Mittels eines Drahtes sind die Haken der benachbarten Reihen miteinander verbindbar, um die Isolationsfasermatte 1.4 am Rohr 9 zu sichern.

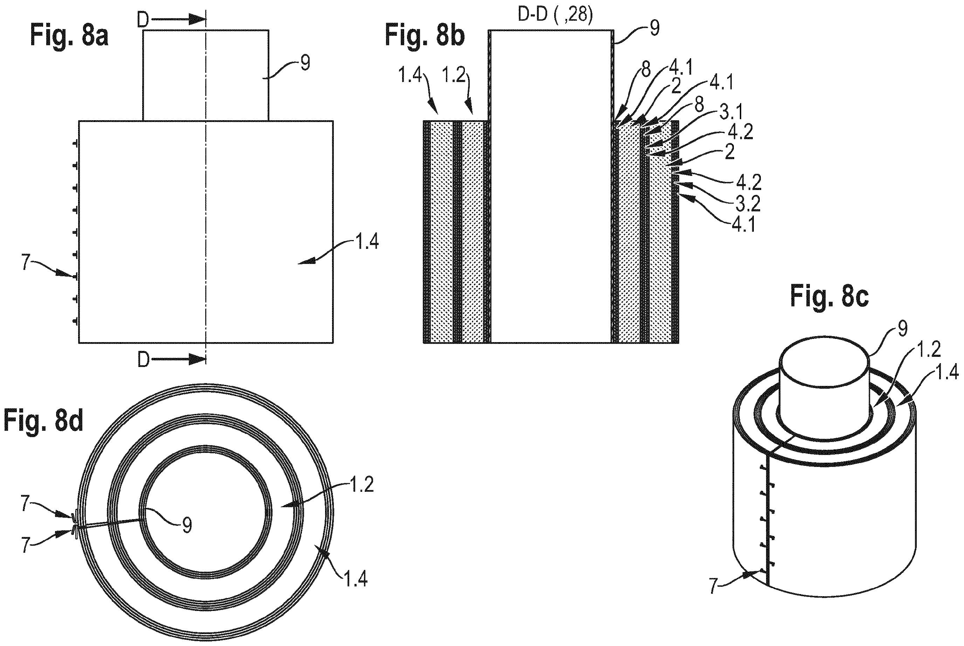

Gemäß Fig. 8 ist direkt um das Rohr eine Isolationsfasermatte 1.2 gemäß Fig. 2 herumgelegt, um die wiederum eine Isolationsfasermatte 1.4 gemäß Fig. 6 herumgelegt ist. Die untere Isolationsfasermatte 1.2 hält hohen Belastungen stand und die äußere Isolationsfasermatte 1.4 ist einfach montierbar, schmutzabweisend und einfach zu reinigen.

## Patentansprüche

1. Isoliermatratze zum Isolieren von heißen Anlagenteilen, insbesondere von Schiffen und von Produktionsanlagen, umfassend
• mindestens eine hitzebeständige Isolationsmatte (2),
• ein hitzebeständiges Gewebe und/oder Gewirke (3, 8) auf der Isolationsmatte (2), und
• eine Aluminiumfolie (4), die an mindestens einer großen Seitenfläche des hitzebeständigen Gewebes oder Gewirkes (3, 8) angeordnet ist,
• **dadurch gekennzeichnet, dass** das hitzebeständige Gewebe und/oder Gewirke (3, 8) die Isolationsfasermatte (2) vollständig umhüllt.

2. Isoliermatratze nach Anspruch 1, bei der das hitzebeständige Gewebe und/oder Gewirke (3) die Isolationsfasermatte (2) vollständig umgibt und die Aluminiumfolie (4.1) außen an einer der beiden großen Seitenflächen des hitzebeständigen Gewebes und/oder Gewirkes (3) angeordnet ist.

3. Isoliermatratze nach Anspruch 1, bei der ein Gewebe und/oder Gewirke (8) aus Edelstahl die Isolationsfasermatte (2) vollständig umgibt und zwischen dem Gewebe und/oder Gewirke (8) und der Isolationsfasermatte (2) eine die Isolationsfasermatte (2) vollständig umgebende Aluminiumfolie (4.2) angeordnet ist.

4. Isoliermatratze nach Anspruch 3, bei der an den Außenseiten des Gewebes und/oder Gewirkes (8) aus Edelstahl keine Aluminiumfolie angeordnet ist.

5. Isoliermatratze nach Anspruch 1, bei der ein unterer Teil der Isolationsfasermatte (2) von einem Gewebe und/oder Gewirke (8.1) aus Edelstahl umhüllt ist und ein oberer Teil der Isolationsfasermatte (2) von einem Gewebe und/oder Gewirke (3.2) aus einem anderen Material als Edelstahl umhüllt ist, so dass die Isolationsfasermatte (2) insgesamt vollständig von dem
Gewebe und/oder Gewirke (8.1) aus Edelstahl und dem Gewebe und/oder Gewirke (3.2) aus einem anderen Material als Edelstahl umhüllt ist, zwischen Isolationsfasermatte (2) und den Geweben und/oder Gewirken eine die Isolationsfasermatte (2) vollständig umhüllende Aluminiumfolie (4.2) angeordnet ist und außen an einer großen Seitenfläche des Gewebes und/oder Gewirkes aus einem anderen Material als Edelstahl eine weitere Aluminiumfolie (4.1) angeordnet ist.

6. Isoliermatratze nach Anspruch 1, bei dem die Isolationsfasermatte (2) vollständig von einem Gewebe und/oder Gewirke (3) umhüllt ist, zwischen dem Gewebe und/oder Gewirke (3) und der Isolationsfasermatte (2) eine die Isolationsfasermatte vollständig umhüllende Aluminiumfolie (4.2) angeordnet ist und außen an mindestens einer der beiden großen Seitenflächen des Gewebes und/oder Gewirkes eine weitere Aluminiumfolie (4.1) angeordnet ist.

7. Isoliermatratze nach einem der Ansprüche 1 bis 6, bei der ein den unteren Teil der Isolationsfasermatte (2) umhüllendes Gewebe und/oder Gewirke (8.1) und ein den oberen Teil der Isolationsfasermatte (2) umhüllendes Gewebe und/oder Gewirke (3.2) durch eine seitlich um die Isolationsfasermatte (2) umlaufende Naht (6.1, 6.2) miteinander verbunden sind.

8. Isoliermatratze nach einem der Ansprüche 1 bis 7, bei dem die Isolationsfasermatte (2) ein Filz oder Vlies, hergestellt aus Glasfasern, Mineralwollfasern, Kohlenstofffasern oder Silikatfasern oder einem Gemisch aus mehreren der vorgenannten Komponenten ist.

9. Isoliermatratze nach einem der Ansprüche 1 bis 8, die formaldehydfrei und/oder bindemittelfrei und/oder klebstofffrei ist.

10. Isoliermatratze nach einem der Ansprüche 1 bis 9, bei der das Gewebe (3) ein Glasfasergewebe ist.

11. Isoliermatratze nach einem der Ansprüche 1 bis 10, bei der das Gewebe und/oder Gewirke (3, 8) ein formaldehydfreies und/oder bindemittelfreies und/oder klebstofffreies Gewebe und/oder Gewirke ist.

12. Isoliermatratze nach Anspruch 10 oder 11, bei der das Glasfasergewebe (3) ein ausgeglühtes Glasfasergewebe ist.

13. Isoliermatratze nach einem der Ansprüche 1 bis 12, bei der an der Außenseite der Aluminiumfolie (4) oder des Gewebes und/oder Gewirkes (3, 8) Haken (7) und/oder Druckknöpfe und/oder andere hitzebeständige Befestigungsmittel zum Fixieren der Isoliermatratze auf einem Anlagenteil (9) vorhanden sind.

14. Isoliermatratze nach einem der Ansprüche 1 bis 13, bei der die außen am hitzebeständigen Gewebe und/oder Gewirke (3, 8) angeordnete Aluminiumfolie (4.2) eine Grobkorn-Aluminiumfolie ist.

15. Isolieranordnung mit einer Armatur, einem Rohr (9) oder einem anderen Anlagenteil und mindestens einer das Anlagenteil umschließenden, mit der Außenseite zur Umgebung weisenden Isoliermatratze (1) gemäß einem der Ansprüche 1 bis 14.

16. Isolieranordnung nach Anspruch 15, bei der die Isoliermatratze (1) auf dem Anlagenteil (9) durch mindestens einen Draht gesichert ist, der durch die Haken (7) hindurchgeführt ist und die Isoliermatratze (1) um das Anlagenteil (9) zusammenzieht.

## Claims

1. Insulating pad for isolating hot parts of an installation, in particular of ships and of production plants, comprising
• at least one heat-resistant isolation mat (2),
• a heat-resistant woven and/or knitted fabric (3, 8) on the isolation mat (2), and
• an aluminum foil (4), which is arranged on at least one large side surface of the heat-resistant woven or knitted fabric (3, 8),
• **characterized in that**, the heat-resistant woven and/or knitted fabric (3, 8) completely envelopes the isolation fiber mat (2).

2. Insulating pad according to claim 1, in which the heat-resistant woven and/or knitted fabric (3) completely encloses the insulating fiber mat (2) and the aluminum foil (4.1) is arranged externally on one of the two large side surfaces of the heat-resistant woven and/or knitted fabric (3).

3. Insulating pad according to claim 1, in which a woven and/or knitted fabric (8) of stainless steel completely encloses the insulating fiber mat (2) and an aluminum foil (4.2) completely enclosing the insulating fiber mat (2) is arranged between the woven and/or knitted fabric (8) and the insulating fiber mat (2).

4. Insulating pad according to claim 3, in which no aluminum foil is arranged on the exterior surface of the woven and/or knitted fabric (8) of stainless steel.

5. Insulating pad according to claim 1, in which a bottom part of the insulating fiber mat (2) is enveloped by a woven and/or knitted fabric (8.1) of stainless steel and an upper part of the insulating fiber mat (2) is enveloped by a woven and/or knitted fabric (3.2) of a material other than stainless steel, so that the insulating fiber mat (2) as a whole is completely enveloped by the woven and/or knitted fabric (8.1) of stainless steel and the woven and/or knitted fabric (3.2) of a material other than stainless steel, an aluminum foil (4.2) completely enveloping the insulation fiber mat (2) is arranged between the insulation fiber mat (2) and the woven and/or knitted fabric (3.2), and a further aluminum foil (4.1) is arranged externally on a large side surface of the woven and/or knitted fabric of a material other than stainless steel.

6. Insulating pad according to claim 1, in which the insulating fiber mat (2) is completely enveloped by a woven and/or knitted fabric (3), an aluminum foil (4.2) completely enveloping the insulating fiber mat is arranged between the woven and/or knitted fabric (3) and the insulating fiber mat (2), and a further aluminum foil (4.1) is arranged on the exterior of at least one of the two large side surfaces of the woven and/or knitted fabric.

7. Insulating pad according to one of claims 1 to 6, in which the woven and/or knitted fabric (8.1) enveloping the bottom part of the insulating fiber mat (2) and the woven and/or knitted fabric (3.2) enveloping the top part of the insulating fiber mat (2) are connected to one another by a seam (6.1, 6.2) running laterally around the insulating fiber mat (2).

8. Insulating pad according to one of claims 1 to 7, in which the insulating fiber mat (2) is a felt or nonwoven fabric made of glass fibers, mineral wool fibers, carbon fibers or silicate fibers, or a mixture of several of the aforementioned components..

9. Insulating pad according to one of claims 1 to 8, which is formaldehyde-free and/or binder-free and/or adhesive-free.

10. Insulating pad according to one of claims 1 to 9, in which the woven fabric (3) is a fiberglass fabric.

11. Insulating pad according to one of claims 1 to 10, in which the woven and/or knitted fabric (3, 8) is a formaldehyde-free and/or binder-free and/or adhesive-free woven and/or knitted fabric.

12. Insulating pad according to claim 10 or 11, in which the woven fiberglass fabric (3) is an annealed glass fiber fabric.

13. Insulating pad according to one of claims 1 to 12, in which hooks (7) and/or press studs and/or other heat-resistant fastening means for fixing the insulating pad on an installation part (9) are provided on the exterior surface of the aluminum foil (4) or of the fabric and/or knitted fabric (3, 8).

14. Insulating pad according to one of claims 1 to 13, in which the aluminum foil (4.2) arranged on the exterior of the heat-resistant woven and/or knitted fabric (3, 8) is a coarse-grain aluminum foil.

15. Insulating arrangement having a fixture, a pipe (9) or another part of the installation and at least one insulating pad (1) which surrounds the part of the installation and the exterior of the insulation pad (1) facing the surroundings in accordance with one of claims 1 to 14.

16. Insulating arrangement according to claim 15, in which the insulating pad (1) is secured on the installation part (9) by at least one wire which passes through the hooks (7) and pulls the insulating pad (1) tight around the installation part (9).

## Revendications

1. Matelas isolant pour l'isolation d'éléments d'installation chauds, en particulier de navires et d'installations de production, comportant
- au moins un tapis isolant thermorésistant (2),
- un tissu et/ou un maillage thermorésistant (3, 8) sur le tapis isolant (2), et
- une feuille d'aluminium (4) disposée sur au moins une grande surface latérale du tissu ou du maillage thermorésistant (3, 8),
- **caractérisé en ce que** le tissu et/ou le maillage thermorésistant (3, 8) enveloppe entièrement le tapis de fibres isolant (2).

2. Matelas isolant selon la revendication 1, dans lequel le tissu et/ou le maillage thermorésistant (3) entoure entièrement le tapis de fibres isolant (2) et la feuille d'aluminium (4.1) est disposée extérieurement sur l'une des deux grandes surfaces latérales du tissu et/ou du maillage thermorésistant (3).

3. Matelas isolant selon la revendication 1, dans lequel un tissu et/ou un maillage (8) en acier inoxydable entoure entièrement le tapis de fibres isolant (2) et une feuille d'aluminium (4.2) entourant entièrement le tapis de fibres isolant (2) est disposée entre le tissu et/ou le maillage (8) et le tapis de fibres isolant (2).

4. Matelas isolant selon la revendication 3, dans lequel aucune feuille d'aluminium n'est disposée sur les côtés extérieurs du tissu et/ou du maillage (8) en acier inoxydable.

5. Matelas isolant selon la revendication 1, dans lequel une partie inférieure du tapis de fibres isolant (2) est enveloppée par un tissu et/ou un maillage (8.1) en acier inoxydable et une partie supérieure du tapis de fibres isolant (2) est enveloppée par un tissu et/ou un maillage (3.2) constitué d'un matériau différent de l'acier inoxydable, de telle façon que le tapis de fibres isolant (2) dans son ensemble est entièrement enveloppé par le tissu et/ou le maillage (8.1) en acier inoxydable et le tissu et/ou le maillage (3.2) constitué d'un matériau différent de l'acier inoxydable, qu'une feuille d'aluminium (4.2) enveloppant entièrement le tapis de fibres isolant (2) est disposée entre le tapis de fibres isolant (2) et les tissus et/ou les maillages, et qu'une autre feuille d'aluminium (4.1) est disposée extérieurement sur une grande surface latérale du tissu et/ou du maillage constitué d'un matériau différent de l'acier inoxydable.

6. Matelas isolant selon la revendication 1, dans lequel le tapis de fibres isolant (2) est entièrement enveloppé par un tissu et/ou un maillage (3), une feuille d'aluminium (4.2) enveloppant entièrement le tapis de fibres isolant est disposé entre le tissu et/ou le maillage (3) et le tapis de fibres isolant (2), et une autre feuille d'aluminium (4.1) est disposée extérieurement sur l'une au moins des deux grandes surfaces latérales du tissu et/ou du maillage.

7. Matelas isolant selon l'une des revendications 1 à 6, dans lequel un tissu et/ou un maillage (8.1) enveloppant la partie inférieure du tapis de fibres isolant (2) et un tissu et/ou un maillage (3.2) enveloppant la partie supérieure du tapis de fibres isolant (2) sont reliés entre eux par une couture (6.1, 6.2) s'étendant latéralement autour du tapis de fibres isolant (2).

8. Matelas isolant selon l'une des revendications 1 à 7, dans lequel le tapis de fibres isolant (2) est un feutre ou un non tissé, réalisé en fibres de verre, en fibres de laine minérale, en fibres de carbone ou en fibres de silicate ou en un mélange de plusieurs des composants précités.

9. Matelas isolant selon l'une des revendications 1 à 8, lequel est exempt de formaldéhyde et/ou exempt de liant et/ou exempt de colle.

10. Matelas isolant selon l'une des revendications 1 à 9, dans lequel le tissu (3) est un tissu en fibres de verre.

11. Matelas isolant selon l'une des revendications 1 à 10, dans lequel le tissu et/ou le maillage (3, 8) est un tissu et/ou un maillage exempt de formaldéhyde et/ou exempt de liant et/ou exempt de colle.

12. Matelas isolant selon la revendication 10 ou 11, dans lequel le tissu en fibres de verre (3) est un tissu en fibres de verre recuit.

13. Matelas isolant selon l'une des revendications 1 à 12, dans lequel des crochets (7) et/ou des boutons à pression et/ou d'autres moyens de fixation thermorésistants sont prévus sur le côté extérieur de la feuille d'aluminium (4) ou du tissu et/ou du maillage (3, 8), pour la fixation du matelas isolant sur un élément d'installation (9).

14. Matelas isolant selon l'une des revendications 1 à 13, dans lequel la feuille d'aluminium (4.2) disposée extérieurement sur le tissu et/ou le maillage thermorésistant (3, 8) est une feuille d'aluminium à gros grain.

15. Ensemble d'isolation comprenant une armature, un conduit (9) ou un autre élément d'installation et au moins un matelas isolant (1) selon l'une des revendications 1 à 14, lequel entoure l'élément d'installation, avec le côté extérieur tourné vers l'environnement.

16. Ensemble d'isolation selon la revendication 15, dans lequel le matelas isolant (1) est fixé sur l'élément d'installation (9) par au moins un fil passant à travers les crochets (7) et resserrant le matelas isolant (1) autour de l'élément d'installation (9).
